# EUROPEAN PATENT APPLICATION

(11) **EP 1 555 748 A2**
(43) Date of publication of application: **20.07.2005**
(21) Application number: 05000503.2
(22) Date of filing: 12.01.2005
(51) Int. Cl.: H02P 6/00

(54) **Method for detecting angular difference and apparatus for controlling synchronous motor**

(30) Priority: 15.01.2004 JP 2004008091
(71) Applicant: FANUC LTD, Minamitsuru-gun, Yamanashi 401-0597 (JP)
(72) Inventor: Iwashita, Yasusuke, Fujiyoshida-shi Yamanashi 403-0003 (JP); Akiyama, Takahiro FANUC Dai3virakaramatsu, Minamitsuru-gun Yamanashi 401-0511 (JP); Tezuka, Junichi Room 12-408, FANUC Manshonharimoni, Minamitsuru-gun Yamanashi 401-0511 (JP)
(74) Representative: Schmidt, Steffen J., Dipl.-Ing.

(57) **Abstract**

Disclosed is a method for detecting an angular difference between a motor magnetic pole position and an encoder reference position in a permanent magnet synchronous motor equipped with an incremental encoder, wherein a DC current command for supplying a monotonically decreasing DC current is applied to the permanent magnet motor for DC excitation, and the angular difference is detected by detecting an amount of rotor movement due to the DC excitation by using the incremental encoder. By applying a DC excitation current command for supplying a monotonically decreasing DC current rather than supplying a DC current of constant magnitude as in the prior art, it becomes possible, without estimating the initial magnetic pole position, to shorten the time required for the motor rotor to stop, while preventing the phenomenon in which the rotor does not stop at the magnetic pole position but oscillates around that position.

## Description

### BACKGROUND OF THE INVENTION

### 1. Field of the Invention

The present invention relates to a method for detecting an angular difference between a motor magnetic pole position and an encoder reference position in a permanent magnet synchronous motor equipped with an incremental encoder, and also relates to an apparatus, for controlling the synchronous motor, to which the method for detecting the angular difference is applied.

### 2. Description of the Related Art

In a permanent magnet synchronous motor, the magnetic pole position of a rotor made of a permanent magnet is detected by a detector, and a current proportional to the detector signal is made to flow through an armature coil for operation.

It is known to use a Hall element, an absolute encoder, or an incremental encoder as the detector for detecting the magnetic pole position of the rotor. The Hall element which only detects the phase position has the problem that it cannot be used when a square wave is used for driving, while the absolute encoder has the problem that it is expensive though it can be used when a sinusoidal wave is used for driving.

On the other hand, the incremental encoder cannot detect the magnetic pole position of the rotor at the start of the operation, because it loses track of the position when power is interrupted. It is therefore practiced to register the position of the rotor and the incremental encoder so that the position indicated by the reference position signal of the incremental encoder coincides with the magnetic pole position of the rotor.

More specifically, when starting the operation, suitable power is supplied to rotate the motor, causing the incremental encoder to rotate with the rotation of the motor, and when the reference position signal of the incremental encoder is detected, the electric current command to the motor is changed to an electric current command that matches the magnetic pole position of the rotor; in this way, motor operation becomes.possible even if the magnetic pole position of the rotor cannot be detected at the start of the operation.

In another method of making the position indicated by the reference position signal of the incremental encoder coincide with the magnetic pole position of the rotor, besides the method of manually assembling the incremental encoder so that the position indicated by the reference position signal of the incremental encoder coincides with the magnetic pole position of the rotor, an invention is proposed (for example, refer to Patent Document 1) in which design freedom in terms of the mounting position of the incremental encoder is enhanced by making provisions to compensate for the displacement between the reference position of the incremental encoder and the rotor magnetic pole position of the motor.

With the above proposed method, however, the angular difference has to be adjusted repeatedly; in view of this, an invention that eliminates the need for this adjustment is proposed (for example, refer to Patent Document 2). According to this proposed invention, with an angular difference existing between the magnetic pole position of the rotor and the origin position of the incremental encoder, the magnetic pole position of the rotor is locked at a stable position by applying DC excitation and, by reference to this position, initialization is performed so that the amount of change in the output of the incremental encoder provides the magnetic pole position of the rotor.

In the method of making the position indicated by the reference position signal of the incremental encoder coincide with the magnetic pole position of the rotor according to the above Patent Document 2, with an angular difference existing between the magnetic pole position of the rotor and the origin position of the incremental encoder, DC excitation is applied to thereby lock the magnetic pole position of the rotor at a stable position; here, the DC excitation is applied by using an electric current command for supplying an electric current of constant magnitude. As a result, there is a first problem that the time required for the motor rotor to stop becomes long. A second problem is that, if the friction of the rotor is small, the rotor does not stop at the pole position but oscillates around that position.

Such oscillation is described, for example, in Patent Document 3. To prevent the rotor from oscillating due to DC excitation, this document proposes to pre-estimate the initial magnetic pole position within the control apparatus and to set the estimated rotor magnetic pole position in a DC excitation position command as initial setting.

The above Patent Document 3 obtains the angular difference by using the angular difference arising when the moving part is locked into position by moving it in the forward direction with respect to the magnetic pole locked position as well as the angular difference arising when it is locked into position by moving it in the reverse direction, or by using the angular difference arising when the moving part is locked into position by moving it in the forward direction from a prescribed magnetic pole position as well as the angular difference arising when it is locked into position by moving it in the reverse direction from the prescribed magnetic pole position.

Accordingly, the technique described in the above Patent Document 3 concerns a method that detects the magnetic pole position highly accurately by varying the excitation phase in order to solve the second problem, and this technique is different from the technique described in the above Patent Document 2 which concerns a method that locks the magnetic pole position of the rotor at a stable position by applying DC excitation and performs initialization by reference to this position so that the amount of change in the output of the incremental encoder provides the magnetic pole position of the rotor.
Further, while the technique described in the above Patent Document 3 solves the second problem that, if the friction of the rotor is small, the rotor does not stop at the pole position but oscillates around that position, the technique does not solve the first problem that the time required for the motor rotor to stop becomes long.
[Patent Document 1] Japanese Utility Model Publication No. H03-48397
[Patent Document 2] Japanese Unexamined Patent Publication No. S63-107485
[Patent Document 3] Japanese Patent No. 3465654 (paragraph No. 0027)

### SUMMARY OF THE INVENTION

Accordingly, in a method for detecting an angular difference and an apparatus for controlling a synchronous motor in which, in accordance with the technique of Patent Document 2, the magnetic pole position of the rotor is locked at a stable position by applying DC excitation and, by reference to this position, initialization is performed so that the amount of change in the output of the incremental encoder provides the magnetic pole position of the rotor, it is an object of the present invention to shorten the time required for the motor rotor to stop (i.e., to solve the first problem) without pre-estimating the initial magnetic pole position within the control apparatus, by using a technique different from that described in Patent Document 3, while also solving the problem associated with the technique of Patent Document 2 by preventing the phenomenon in which the rotor does not stop at the magnetic pole position but oscillates around that position (the second problem).

The present invention uses a monotonically decreasing DC current as a DC excitation current command, instead of a DC current of constant magnitude as used in the prior art, and thereby shortens the time required for the motor rotor to stop, while also preventing the phenomenon in which the rotor does not stop at the magnetic pole position but oscillates around that position.
The present invention can be embodied in a method for detecting an angular difference and an apparatus for controlling a synchronous motor.

The present invention provides a method for detecting an angular difference between a motor magnetic pole position and an encoder reference position in a permanent magnet synchronous motor equipped with an incremental encoder, wherein a DC current command for supplying a monotonically decreasing DC current is applied to the permanent magnet motor for DC excitation, and the angular difference is detected by detecting an amount of rotor movement due to the DC excitation by using the incremental encoder.

In the method for detecting the angular difference according to the present invention, the DC current command can be implemented in a variety of modes.
In a first mode, the DC current command instructs that a monotonically decreasing DC current decreasing stepwise from its initial value be supplied; in this mode, the command value is made successively smaller in stepwise fashion starting from its initial value. The number of steps is at least two.

In a second mode, the DC current command instructs that a monotonically decreasing DC current decreasing exponentially from its initial value be supplied; in this mode, the time constant, with which the value decreases, can be set as desired.
In a third mode, the DC current command instructs that a monotonically decreasing DC current decreasing linearly from its initial value be supplied; in this mode, the interval over which the value decreases can be set as desired.
In a fourth mode, the DC current command can be set by combining at least two DC current decreasing modes selected from among the mode that decreases the DC current stepwise from the initial value, the mode that decreases the DC current exponentially from the initial value, and the mode that decreases the DC current linearly from the initial value. These two or three modes can be used in any desired combination.

The present invention also provides an apparatus for controlling a permanent magnet synchronous motor equipped with an incremental encoder, comprising: DC current command calculating means for calculating a DC current command for supplying a monotonically decreasing DC current; and angular difference detecting means for detecting an angular difference between a motor magnetic pole position and an encoder reference position in the permanent magnet synchronous motor, wherein the DC current command calculated by the DC current command calculating means is applied to the permanent magnet motor for DC excitation, the angular difference detecting means detects the angular difference by detecting an amount of rotor movement due to the DC excitation by using the incremental encoder, and the control is performed by determining a rotor magnetic pole position from the angular difference.

In the apparatus for controlling the synchronous motor according to the present invention, the DC current command can be implemented in a variety of modes, as in the method for detecting the angular difference described above.
In a first mode, the DC current command instructs that a monotonically decreasing DC current decreasing stepwise from its initial value be supplied; in a second mode, the DC current command instructs that a monotonically decreasing DC current decreasing exponentially from its initial value be supplied; in a third mode, the DC current command instructs that a monotonically decreasing DC current decreasing linearly from its initial value be supplied; and in a fourth mode, the DC current command is created by combining at least two DC current decreasing modes selected from among the mode that decreases the DC current stepwise from the initial value, the mode that decreases the DC current exponentially from the initial value, and the mode that decreases the DC current linearly from the initial value.

According to the present invention, in a method for detecting an angular difference and an apparatus for controlling a synchronous motor in which the magnetic pole position of the rotor is locked at a stable position by applying DC excitation and, by reference to this position, initialization is performed so that the amount of change in the output of the incremental encoder provides the magnetic pole position of the rotor, it becomes possible, without pre-estimating the initial magnetic pole position within the control apparatus, to shorten the time required for the motor rotor to stop, while preventing the phenomenon in which the rotor does not stop at the magnetic pole position but oscillates around that position.

### BRIEF DESCRIPTION OF THE DRAWINGS

FIG. 1 is a schematic diagram for explaining an outline of an apparatus for controlling a synchronous motor according to the present invention.
FIG. 2a is a diagram showing a step-like DC current command.
FIG. 2b is a diagram showing a specific example of a monotonically decreasing DC current command whose value decreases exponentially from its initial value.
FIG. 3a is a diagram showing motor speed when DC excitation is applied in accordance with a DC current command with a constant current value.
FIG. 3b is a diagram showing motor speed when DC excitation is applied in accordance with a monotonically decreasing DC current command whose value decreases exponentially.
FIG. 4a is a diagram showing a specific example of a DC current command for supplying a monotonically decreasing DC current decreasing stepwise from its initial value.
FIG. 4b is a diagram showing a specific example of a DC current command for supplying a monotonically decreasing DC current decreasing linearly from its initial value.
FIGS. 5a to 5d are diagrams each showing a specific example of a monotonically decreasing DC current created by combining suitable DC current decreasing modes selected from among the stepwise decreasing mode, the exponentially decreasing mode, and the linearly decreasing mode.

### DESCRIPTION OF THE PREFERRED EMBODIMENTS

A method for detecting an angular difference and an apparatus for controlling a synchronous motor, according to the present invention, will be described below with reference to the drawings.

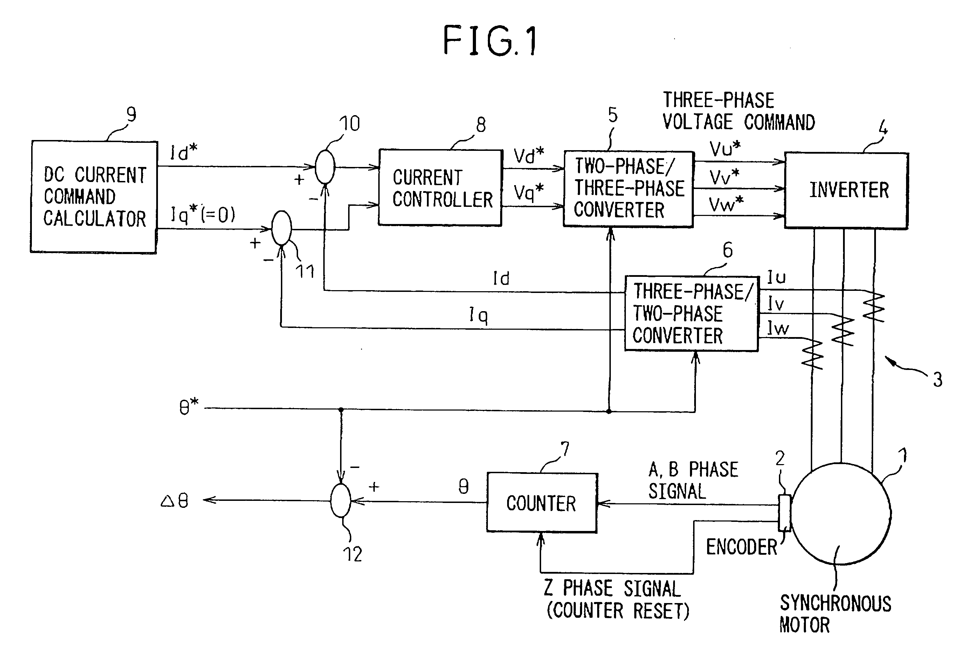

FIG. 1 is a schematic diagram for explaining an outline of the apparatus for controlling the synchronous motor according to the present invention. In FIG. 1, reference numeral 1 is a permanent magnet synchronous motor, and 2 is an incremental encoder which detects the rotation of the permanent magnet synchronous motor 1, and outputs A and B phase signals for detecting the position in the forward/backward direction and during one revolution and a Z phase signal, i.e., a reference position signal which is output once per revolution.
It is assumed here that the permanent magnet synchronous motor 1 and the incremental encoder 2 are in a condition in which the rotor magnetic pole position of the synchronous motor 1 does not coincide with the reference position of the encoder.

Further, in the figure, reference numeral 3 is a current detector, reference numeral 4 is an inverter (power converter) which controls the synchronous motor 1 based on three-phase voltage commands Vu*, Vv*, and Vw* output from a two-phase/three-phase converter 5 (dq/3Φ coordinate converter), reference numeral 5 is the two-phase/three-phase converter 5 (dq/3Φ coordinate converter) which converts Vq* and Vd* into the three-phase voltage commands Vu*, Vv*, and Vw*, Vq* and Vd* being the commands created by converting a q-axis current (torque current) command Iq* (Iq* = 0) and a d-axis current (excitation current) command Id* through PI control by a current controller 8, reference numeral 6 is a two-phase/three-phase converter which receives phase currents Iu, Iv, and Iw detected by the current detector 3 and converts them into Id and Iq currents for feedback, reference numeral 7 is a counter which is cleared for each revolution by a counter reset signal, i.e., the Z phase signal from the incremental encoder 2, reference numeral 8 is the current controller, and reference numeral 9 is a DC current command calculator which calculates a DC current command.

Further, reference numeral 10 is a deviation calculator which calculates the deviation between the d-axis current command Id* and the Id current, reference numeral 11 is a deviation calculator which calculates the deviation between the q-axis current command Iq* (Iq* = 0) and the Iq current, and reference numeral 12 is a deviation calculator which outputs the deviation Δθ between the excitation phase (DC excitation position command) θ* and the feedback position signal θ output from the incremental encoder 2. The deviation Δθ represents the phase difference between the excitation phase and the rotor phase (relative to the Z phase signal). An angle calculator (not shown) corrects the angular difference between the reference position of the incremental encoder and the rotor magnetic pole position of the motor by using the deviation Δθ output from the deviation calculator 12.

The configuration shown in FIG. 1 is that of a conventional motor control system, and the feedback system associated with the incremental encoder, and is used to control the motor, is not shown here.
The operation of the above-described motor is the same as that of a conventional motor, and the q-axis current command Iq* (Iq* = 0), the d-axis current command Id*, and the excitation phase (DC excitation position command) θ* are used as the control inputs.

The excitation phase (DC excitation position command) θ* is input to the two-phase/three-phase converter 5. The phase currents Iu, Iv, and Iw detected by the current detector are fed back to the three-phase/two-phase converter 6 for conversion into the Id and Id currents, which are fed to the deviation calculators 10 and 11, respectively, where their deviations from the q-axis current command Iq* (Iq* = 0) and the d-axis current command Id* are calculated.

Of the d-phase current command Id* and the q-axis current command Iq* calculated by the DC current command calculator 9, the q-axis current command Iq* is set to 0 so that the current command only for one phase is applied for DC excitation. The deviation between the q-axis current command Iq* (Iq* = 0) and the Iq current and the deviation between the d-axis current command Id* and the Id current are converted by the current controller 8 into the two-phase voltage commands Vd* and Vq* which are further converted by the two-phase/three-phase converter 5 into the three-phase voltage commands Vu*, Vv*, and Vw*. The inverter 4 drives the synchronous motor 1 in accordance with the three-phase voltage commands Vu*, Vv*, and Vw*.

The synchronous motor of the present invention is characterized in that the DC current command output from the DC current command calculator 9 causes the DC current to decrease monotonically. The monotonically decreasing DC current here may be a monotonically decreasing DC current decreasing stepwise from its initial value, a monotonically decreasing DC current decreasing exponentially from its initial value, a monotonically decreasing DC current decreasing linearly from its initial value, or a combination of at least two DC current decreasing modes selected from among the stepwise decreasing mode, the exponentially decreasing mode, and the linearly decreasing mode.

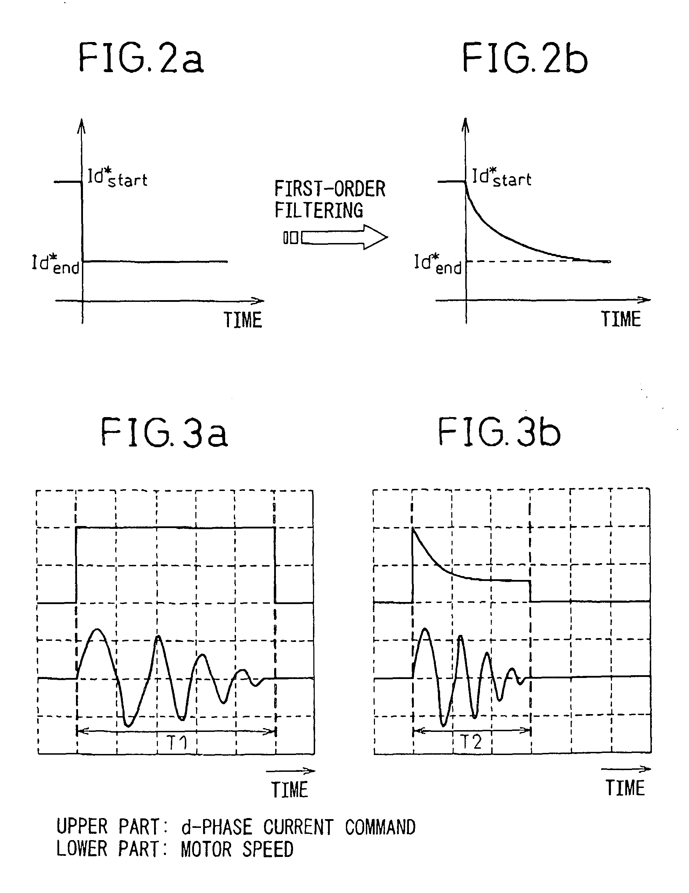

FIG. 2a is a diagram showing a step-like DC current command, and FIG. 2b is a diagram showing a specific example of a monotonically decreasing DC current command whose value decreases exponentially from its initial value. The DC current command calculator 9 applies first-order filtering to the step-like varying d-phase current command Id* whose initial value is Id*ₛₜₐᵣₜ and whose final value is Id^{*}_{end} (see FIG. 2a), and thus calculates the monotonically decreasing DC current command whose value decreases exponentially (see FIG. 2b), while setting the q-phase current command Iq* to 0; then, their deviations from the Id and Iq currents are calculated by the deviation calculators 10 and 11 and the results are supplied to the current controller 8.

FIG. 3a is a diagram showing motor speed when DC excitation is applied in accordance with a DC current command with a constant current value, as contrasted with FIG. 3b which shows motor speed when DC excitation is applied in accordance with a monotonically decreasing DC current command whose value decreases exponentially.

In FIG. 3a, the d-phase current command with a constant current value is shown in the upper part, and the motor speed due to the DC excitation is shown in the lower part, while in FIG. 3b, the monotonically decreasing DC current command whose value decreases exponentially is shown in the upper part, and the motor speed due to the DC excitation is shown in the lower part. When the DC excitation is applied in accordance with the d-phase current command with a constant current value (FIG. 3a), the time required for the motor speed to settle is T1, while when the DC excitation is applied in accordance with the monotonically decreasing DC current command whose value decreases exponentially (FIG. 3b), the time required for the motor speed to settle is T2 (T2 « T1), which shows that the time required for the rotor to stop can be shortened.

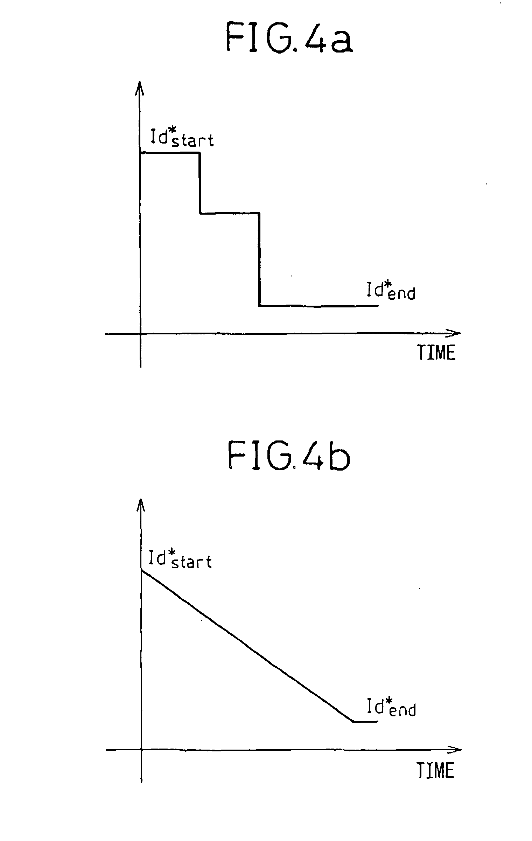

FIG. 4a is a diagram showing a specific example of a DC current command for supplying a monotonically decreasing DC current decreasing stepwise from its initial value; the initial value of the d-phase current command Id* is denoted by Td*ₛₜₐᵣₜ and the final value by Id^{*}_{end}, and the waveform of the DC current command for causing the current to decrease stepwise between these two values is shown in the diagram.

On the other hand, FIG. 4b is a diagram showing a specific example of a DC current command for supplying a monotonically decreasing DC current decreasing linearly from its initial value; the initial value of the d-phase current command Id* is denoted by Id*ₛₜₐᵣₜ and the final value by Id*_{end}, and the waveform of the DC current command for causing the current to decrease linearly between these two values is shown in the diagram.

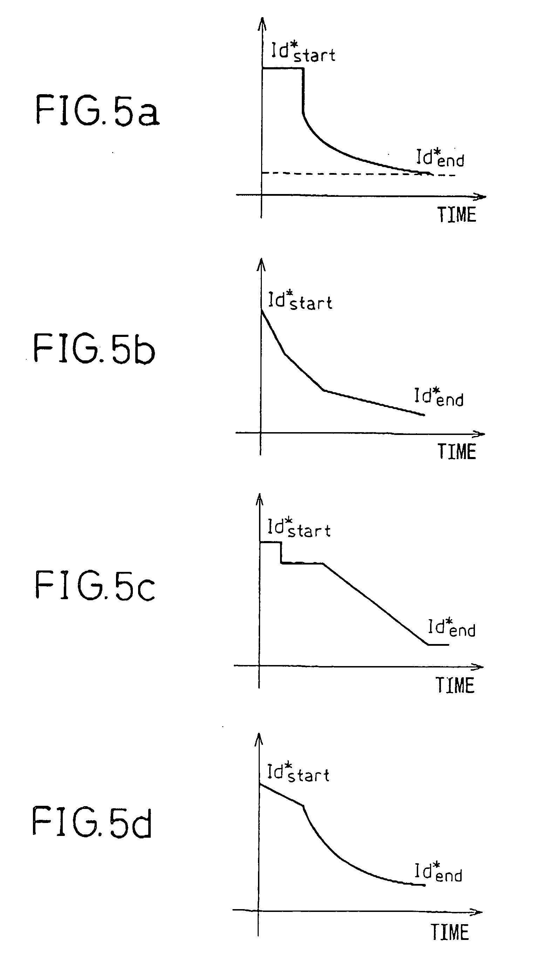

FIGS. 5a to 5d are diagrams each showing a specific example of a monotonically decreasing DC current created by combining suitable DC current decreasing modes selected from among the stepwise decreasing mode, the exponentially decreasing mode, and the linearly decreasing mode.

FIG. 5a is a diagram showing a specific example of a DC current command created by combining the stepwise decreasing mode and the exponentially decreasing mode; the initial value of the d-phase current command Id* is denoted by Id*ₛₜₐᵣₜ, and the waveform of the DC current command for causing the current to decrease stepwise first and then decrease exponentially to the final value Id*_{end} is shown in the diagram.

FIG. 5b is a diagram showing a specific example of a DC current command created by combining a plurality of linearly decreasing modes; the initial value of the d-phase current command Id^{*} is denoted by Id*ₛₜₐᵣₜ and the final value by Id*_{end}, and the waveform of the DC current command for causing the current to decrease linearly in a plurality of steps between these values is shown in the diagram.

FIG. 5c is a diagram showing a specific example of a DC current command created by combining the stepwise decreasing mode and the linearly decreasing mode; the initial value of the d-phase current command Id* is denoted by Id*ₛₜₐᵣₜ, and the waveform of the DC current command for causing the current to decrease stepwise first and then decrease linearly to the final value Id^{*}_{end} is shown in the diagram.

FIG. 5d is a diagram showing a specific example of a DC current command created by combining the linearly decreasing mode and the exponentially decreasing mode; the initial value of the d-phase current command Id* is denoted by Id*ₛₜₐᵣₜ, and the waveform of the DC current command for causing the current to decrease linearly first and then decrease exponentially to the final value Id*_{end} is shown in the diagram.

## Claims

1. A method for detecting an angular difference between a motor magnetic pole position and an encoder reference position in a permanent magnet synchronous motor equipped with an incremental encoder, wherein a DC current command for supplying a monotonically decreasing DC current is applied to said permanent magnet motor for DC excitation, and said angular difference is detected by detecting an amount of rotor movement due to said DC excitation by using said incremental encoder.

2. The method for detecting the angular difference as claimed in claim 1, wherein said DC current command instructs that a monotonically decreasing DC current decreasing stepwise from an initial value be supplied.

3. The method for detecting the angular difference as claimed in claim 1, wherein said DC current command instructs that a monotonically decreasing DC current decreasing exponentially from an initial value be supplied.

4. The method for detecting the angular difference as claimed in claim 1, wherein said DC current command instructs that a monotonically decreasing DC current decreasing linearly from an initial value be supplied.

5. The method for detecting the angular difference as claimed in claim 1, wherein said DC current command instructs that a monotonically decreasing DC current be supplied that is created by combining at least two DC current decreasing modes selected from among a mode that decreases said DC current stepwise from an initial value, a mode that decreases said DC current exponentially from said initial value, and a mode that decreases said DC current linearly from said initial value.

6. An apparatus for controlling a permanent magnet synchronous motor equipped with an incremental encoder, comprising:
DC current command calculating means for calculating a DC current command for supplying a monotonically decreasing DC current; and
angular difference detecting means for detecting an angular difference between a motor magnetic pole position and an encoder reference position in said permanent magnet synchronous motor, wherein
said DC current command calculated by said DC current command calculating means is applied to said permanent magnet motor for DC excitation,
said angular difference detecting means detects said angular difference by detecting an amount of rotor movement due to said DC excitation by using said incremental encoder, and
said control is performed by determining a rotor magnetic pole position from said angular difference.

7. The apparatus for controlling the synchronous motor as claimed in claim 6, wherein said DC current command instructs that a monotonically decreasing DC current decreasing stepwise from an initial value be supplied.

8. The apparatus for controlling the synchronous motor as claimed in claim 6, wherein said DC current command instructs that a monotonically decreasing DC current decreasing exponentially from an initial value be supplied.

9. The apparatus for controlling the synchronous motor as claimed in claim 6, wherein said DC current command instructs that a monotonically decreasing DC current decreasing linearly from an initial value be supplied.

10. The apparatus for controlling the synchronous motor as claimed in claim 6, wherein said DC current command instructs that a monotonically decreasing DC current be supplied that is created by combining at least two DC current decreasing modes selected from among a mode that decreases said DC current stepwise from an initial value, a mode that decreases said DC current exponentially from said initial value, and a mode that decreases said DC current linearly from said initial value.
